# EUROPÄISCHE PATENTANMELDUNG

(11) **EP 1 496 251 A1**
(43) Veröffentlichungstag der Anmeldung: **12.01.2005**
(21) Anmeldenummer: 03015864.6
(22) Anmeldetag: 11.07.2003
(51) Int. Cl.: F03D 11/00, F03D 1/06

(54) **Vorrichtung zum Enteisen der Rotorblätter einer Windkraftanlage sowie Windkraftanlage mit einer derartigen Vorrichtung**

(71) Anmelder: Lasertechnik Rädisch GmbH, 73230 Kirchheim-Teck (DE)
(72) Erfinder: Rädisch, Gunter, 73230 Kirchheim-Teck (DE)
(74) Vertreter: Karrais, Martin

(57) **Zusammenfassung**

Die Erfindung betrifft eine Vorrichtung zum zumindest bereichsweisen Enteisen der Rotorblätter einer Windkraftanlage. Um die Vorrichtung derart auszugestalten, daß sie eine kostengünstige Enteisung der Rotorblätter ermöglicht, wird erfindungsgemäß vorgeschlagen, daß die Vorrichtung einen Vorratstank (20) für eine Enteisungsflüssigkeit (31) umfaßt, der über eine Ausgangsleitung (25) mit einer Verteilereinheit (29) in Strömungsverbindung steht, wobei in die Ausgangsleitung (25) eine Förderpumpe (37) geschaltet ist und mittels der Verteilereinheit (29) bedarfsweise von der Förderpumpe (37) geförderte Enteisungsflüssigkeit (31) auf die Rotorblätter (14,15,16) aufbringbar ist. Außerdem wird eine Windkraftanlage mit einer derartigen Vorrichtung (18,48,68) vorgeschlagen.

## Beschreibung

Die Erfindung betrifft eine Vorrichtung zum zumindest bereichsweisen Enteisen der Rotorblätter einer Windkraftanlage.

Außerdem betrifft die Erfindung eine Windkraftanlage mit zumindest zwei Rotorblättern, die um eine gemeinsame Drehachse drehbar gehalten sind, und mit einer derartigen Vorrichtung.

Bei Windkraftanlagen stellt sich das Problem, daß sich auf den Rotorblättern eine Eisschicht bilden kann, die zu aerodynamischen und auch mechanischen Funktionsstörungen führen kann und die auch eine Gefahr für die Umwelt durch herabfallende Eisbrocken darstellen kann. Es ist deshalb bereits vorgeschlagen worden (DE 196 44 355 A1), in einer Maschinengondel der Windkraftanlage ein Heißluftgebläse anzuordnen und dann die heiße Luft durch die Rotorblätter hindurchzuführen, um eine Eisbildung zu vermeiden bzw. eine Eisschicht abzuschmelzen.

Zur Eisfreihaltung und Enteisung ist auch schon der Einsatz von Mikrowellen bekannt (DE 101 18 121 A1).

Sowohl der Einsatz eines Heißluftgebläses als auch der Einsatz von Mikrowellen erfordert einen erheblichen konstruktiven Aufwand und ist mit nicht unbedeutenden Kosten verbunden.

Aufgabe der vorliegenden Erfindung ist es, eine Vorrichtung der eingangs genannten Art derart auszubilden, daß sie eine kostengünstige Enteisung der Rotorblätter ermöglicht.

Diese Aufgabe wird bei einer Vorrichtung der eingangs genannten Art erfindungsgemäß dadurch gelöst, daß die Vorrichtung einen Vorratstank für eine Enteisungsflüssigkeit umfaßt, der über eine Ausgangsleitung mit einer Verteilereinheit in Strömungsverbindung steht, wobei in die Ausgangsleitung eine Förderpumpe geschaltet ist und wobei mittels der Verteilereinheit bedarfsweise von der Förderpumpe geförderte Enteisungsflüssigkeit auf die Rotorblätter der Windkraftanlage aufbringbar ist.

In die Erfindung fließt der Gedanke mit ein, daß eine kostengünstige Enteisung zumindest von Bereichen der Rotorblätter der Windkraftanlage auf konstruktiv einfache Weise durch Aufbringen einer Enteisungsflüssigkeit erzielbar ist. Die Enteisungsflüssigkeit wird in einem Vorratstank bevorratet, von dem aus sie mittels einer Förderpumpe und einer Verteilereinheit auf die Rotorblätter aufgebracht werden kann. Die Verteilereinheit ist hierbei vorzugsweise im Bereich der Rotornabe der Windkraftanlage anordenbar, wobei die Ausgangsleitung in die Verteilereinheit einmündet. Bevorzugt geht von der Verteilereinheit dem jeweiligen Rotorblatt zugeordnet eine Verteilungsleitung aus.

Das Aufbringen der Enteisungsflüssigkeit erfolgt bedarfsweise immer dann, wenn die Gefahr einer Eisbildung auf den Rotorblättern besteht. Der Einsatz von Enteisungsflüssigkeit kann dadurch verhältnismäßig gering gehalten werden, so daß die Rotorblätter kostengünstig eisfrei gehalten bzw. von Eis befreit werden können.

Vorzugsweise weist die Verteilereinheit mehrere Sprühdüsen auf, die jeweils einem Rotorblatt zugeordnet sind zum Aufsprühen der Enteisungsflüssigkeit auf das jeweilige Rotorblatt. Die Sprühdüsen können der Rotornabe der Windkraftanlage benachbart angeordnet sein. Die von den Sprühdüsen ausgehende Enteisungsflüssigkeit kann sich aufgrund der auf sie einwirkenden Zentrifugalkraft gleichmäßig über die Oberfläche des Rotorblattes verteilen.

Günstig ist es, wenn die Sprühdüsen relativ zum jeweiligen Rotorblatt unverdrehbar gehalten sind, so daß die Relativlage der Sprühdüse zum jeweiligen Rotorblatt während dessen Drehbewegung nicht verändert wird.

Von Vorteil ist es, wenn die Förderpumpe selbsttätig in Abhängigkeit von der Umgebungstemperatur und/oder der Luftfeuchtigkeit aktivierbar ist. Dies ermöglicht auf kostengünstige Weise den bedarfsweisen Einsatz der Förderpumpe.

Es ist günstig, wenn die Vorrichtung eine elektrische Meßeinheit umfaßt zur Bestimmung der Umgebungstemperatur und/oder der Luftfeuchtigkeit, sowie eine mit der Meßeinheit gekoppelte Steuereinheit zum Steuern der Förderpumpe. Die Meßeinheit stellt der Steuereinheit ein elektrisches Eingangssignal zur Verfügung, das der Umgebungstemperatur, also der Außentemperatur, und/oder der Feuchtigkeit der umgebenden Luft entspricht. Die Steuereinheit kann dann in Abhängigkeit vom zugeführten Meßsignal die Förderpumpe aktivieren. Hierbei kann die Steuereinheit eine Vergleichs- und Auswerteschaltung aufweisen, die die Umgebungstemperatur und/oder die Luftfeuchtigkeit mit vorgegebenen Temperatur- und/oder Luftfeuchtigkeitsdaten vergleicht und aufgrund dieses Vergleiches die Förderkapazität der Förderpumpe steuert.

Um auf kostengünstige Weise eine möglichst gleichmäßige Verteilung der den Rotorblättern zugeführten Enteisungsflüssigkeit sicherzustellen, ist bei einer besonders bevorzugten Ausführungsform der Erfindung vorgesehen, daß die Vorrichtung perforierte Abdeckungen umfaßt, die zum Abdecken zumindest des bezogen auf die Drehrichtung vorderen Kantenbereichs eines Rotorblattes am jeweiligen Rotorblatt anbringbar sind unter Ausbildung eines Zwischenraumes zwischen dem Rotorblatt und der Abdeckung, wobei die Enteisungsflüssigkeit in den Zwischenraum einbringbar, innerhalb des Zwischenraumes über den abgedeckten Bereich des Rotorblattes verteilbar und durch die Perforation der Abdeckung hindurch deren Außenseite zuführbar ist. Eine derartige Ausgestaltung hat den Vorteil, daß die Enteisungsflüssigkeit innerhalb des Zwischenraumes auf einfache Weise - beispielsweise aufgrund der einwirkenden Zentrifugalkraft - über den abgedeckten Bereich des Rotorblattes verteilbar und anschließend durch die Perforation der Abdeckung hindurch deren Außenseite zuführbar ist. Mittels der Abdeckung kann hierbei zumindest der Bereich der Vorderkante der Rotorblätter, der einer besonders starken Eisbildung unterliegt, abgedeckt werden. Unter den Bereich der Vorderkante wird hierbei der bezogen auf die Drehrichtung vordere Kantenbereich eines Rotorblattes verstanden. Die Abdeckung kann sich in Längsrichtung praktisch über das gesamte Rotorblatt erstrecken.

Günstig ist es, wenn die Enteisungsflüssigkeit unter Druckbeaufschlagung in den Zwischenraum einbringbar ist, da dadurch die gleichmäßige Verteilung der Enteisungsflüssigkeit ebenso unterstützt werden kann wie deren Durchtritt durch die Perforation der Abdeckung hindurch.

Bei einer bevorzugten Ausführungsform umfaßt die perforierte Abdeckung ein perforiertes Metallblech, insbesondere ein perforiertes Stahlblech. Alternativ kann vorgesehen sein, daß die perforierte Abdeckung unter Einsatz eines Kunststoffmaterials gefertigt ist. Die Abdeckung weist eine Vielzahl von Durchbrechungen auf. Hierbei ist es günstig, wenn die Perforation der Abdeckung, beispielsweise des Metallblechs, durch Laserbohren hergestellt ist, d. h. die Durchbrechungen durch Einwirkung eines Laserstrahles erzielt wurden.

Vorzugsweise weist die perforierte Abdeckung eine Vielzahl von Durchgangsbohrungen auf mit einem Durchmesser von maximal ca. 0,1 mm. Insbesondere ein Metallblech mit einer Vielzahl derartiger Durchgangsbohrungen hat sich als besonders günstig erwiesen, um die Enteisungsflüssigkeit insbesondere über den Bereich der Vorderkante des Rotorblattes gleichmäßig zu verteilen.

Das Einbringen der Enteisungsflüssigkeit in den Zwischenraum kann bei einer besonders kostengünstig herstellbaren Ausführungsform der erfindungsgemäßen Vorrichtung dadurch erzielt werden, daß die Enteisungsflüssigkeit ausgehend von der Verteilereinheit in den Zwischenraum eingesprüht wird, wobei sich die Enteisungsflüssigkeit innerhalb des Zwischenraumes unter der Wirkung der auf sie einwirkenden Zentrifugalkraft verteilt.

Besonders günstig ist es, wenn die Verteilereinheit jeweils über zumindest abschnittsweise innerhalb der Rotorblätter verlaufende Verteilerleitungen mit den Zwischenräumen in Strömungsverbindung steht. Eine derartige Ausgestaltung hat den Vorteil, daß die Enteisungsflüssigkeit unter Druckbeaufschlagung in die Zwischenräume eingepreßt werden kann.

Um die Wartung der erfindungsgemäßen Vorrichtung zu vereinfachen, ist es günstig, wenn der Vorratstank einen Füllstandssensor aufweist, der ein dem Füllstand des Vorratstanks entsprechendes Füllstandssignal bereitstellt, wobei das Füllstandssignal drahtlos übertragbar ist. Dies ermöglicht eine Fernabfrage des Füllstands des Vorratstanks. Insbesondere können dadurch mehrere Vorrichtungen zum zumindest bereichsweisen Enteisen der Rotorblätter von Windkraftanlagen in ein Fernüberwachungssystem integriert werden, so daß eine Ferndiagnose und vorzugsweise auch eine Fernwartung der Vorrichtungen möglich ist.

Von besonderem Vorteil ist es, wenn die Vorrichtung eine Betriebsdatenerfassungseinheit aufweist, die ein den Betriebs- und Meßdaten der Vorrichtung entsprechendes Betriebsdatensignal bereitstellt, wobei das Betriebsdatensignal drahtlos übertragbar ist. Die ermöglicht eine vollständige Fernerfassung der erfindungsgemäßen Vorrichtung, so daß beispielsweise an einer zentralen Überwachungseinrichtung der Betriebszustand der Vorrichtung sowie die Umgebungstemperatur und die Luftfeuchtigkeit ebenso abgefragt werden können wie der Füllstand des Vorratstankes und der Betriebszustand der Förderpumpe.

Die Erfindung betrifft außerdem eine Windkraftanlage mit zumindest zwei Rotorblättern, die um eine gemeinsame Drehachse drehbar gehalten sind, und mit einer Vorrichtung zum zumindest bereichsweisen Enteisen der Rotorblätter der voranstehend erläuterten Art.

Die Windkraftanlage kann einen Mast aufweisen, der eine Maschinengondel trägt, an der die Rotorblätter drehbar gehalten sind. In diesem Falle ist es günstig, wenn der Vorratstank in der Maschinengondel der Windkraftanlage angeordnet ist und über eine entlang des Mastes verlaufende Befüllungsleitung mit einem am Fuß des Mastes angeordneten Befüllungsanschluß verbunden ist. Vorzugsweise verläuft die Befüllungsleitung innerhalb des Mastes.

Alternativ kann auch vorgesehen sein, daß die Windkraftanlage zumindest zwei vertikal ausgerichtete Rotorblätter umfaßt, die um eine vertikal ausgerichtete Drehachse drehbar gehalten sind. Hierbei ist es von Vorteil, wenn der Vorratstank in Höhe einer Lagerung angeordnet ist, an der die Rotorblätter drehbar gehalten sind.

Als Enteisungsflüssigkeit kommt eine Flüssigkeit zum Einsatz, die den Gefrierpunkt des Wassers herabsetzt, vorzugsweise ein Alkoholgemisch, beispielsweise ein Gemisch aus Monoethylenglykol, Isobutylalkohol und entmineralisiertem Wasser.

Die nachfolgende Beschreibung bevorzugter Ausführungsformen der Erfindung dient im Zusammenhang mit der Zeichnung der näheren Erläuterung. Es zeigen:
- Figur 1:: eine schematische Seitenansicht einer Windkraftanlage mit einer ersten Ausführungsform einer Vorrichtung zum zumindest bereichsweisen Enteisen der Rotorblätter der Windkraftanlage;
- Figur 2:: eine schematische Seitenansicht einer Windkraftanlage mit einer zweiten Ausführungsform einer Vorrichtung zum zumindest bereichsweisen Enteisen der Rotorblätter der Windkraftanlage;
- Figur 3:: eine Schnittansicht längs der Linie 3-3 in Figur 2;
- Figur 4:: eine schematische Vorderansicht der Windkraftanlage aus Figur 2 und
- Figur 5:: eine schematische Seitenansicht einer Windkraftanlage mit einer dritten Ausführungsform einer Vorrichtung zum zumindest bereichsweisen Enteisen der Rotorblätter der Windkraftanlage.

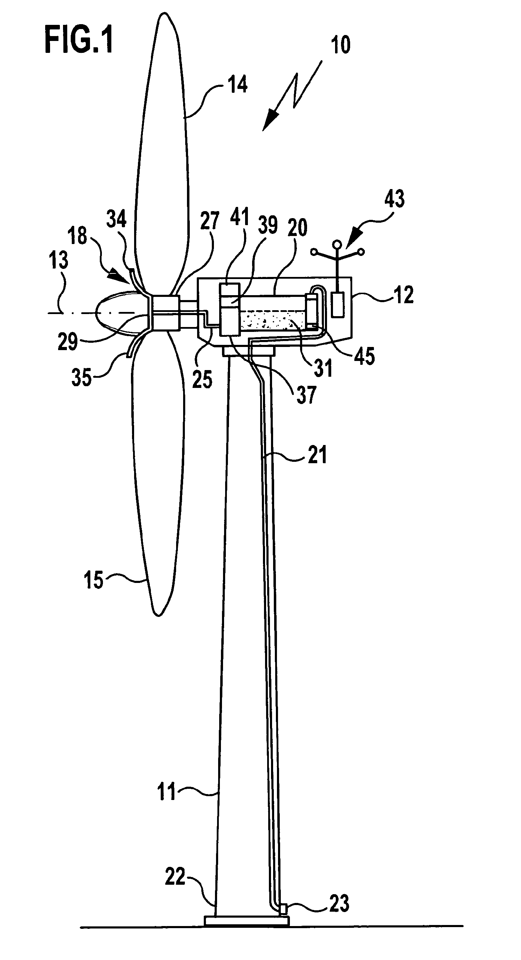

In Figur 1 ist schematisch eine insgesamt mit den Bezugszeichen 10 belegte Windkraftanlage dargestellt. Diese umfaßt einen Mast 11, der eine Maschinengondel 12 trägt, an der um eine gemeinsame, horizontal ausgerichtete Drehachse 13 frei drehbar mehrere Rotorblätter 14, 15 gehalten sind. Die Maschinengondel 12 nimmt in üblicher und deshalb in der Zeichnung nicht dargestellter Weise einen Generator auf für Umwandlung der von den Rotorblättern 14, 15 bereitgestellten mechanischen Bewegungsenergien in elektrische Energie, die in üblicher und deshalb in der Zeichnung ebenfalls nicht dargestellter Weise beispielsweise in ein öffentliches Energieversorgungsnetz eingespeist werden kann.

Um zu vermeiden, daß sich auf den Rotorblättern 14, 15 eine Eisschicht ausbildet, die zu aerodynamischen und mechanischen Funktionsstörungen führen kann und die auch eine Gefahr für die Umwelt durch herabfallende Eisbrocken darstellt, weist die Windkraftanlage 10 eine Vorrichtung (Enteisungsvorrichtung 18) zum zumindest bereichsweisen Enteisen der Rotorblätter 14, 15 auf, die einen in der Maschinengondel 12 angeordneten Vorratstank 20 für Enteisungsflüssigkeit umfaßt, der über eine innerhalb des Mastes 11 verlaufende Befüllungsleitung 21 mit einem am Fuß 22 des Mastes angeordneten Befüllungsanschluß 23 in Strömungsverbindung steht. Der Vorratstank 20 steht über eine Ausgangsleitung 25 mit einer in einer Rotornabe 27 angeordneten Verteilereinheit 29 in Strömungsverbindung, über die eine im Vorratstank 20 angeordnete Enteisungsflüssigkeit 31 jeweils einem Rotorblatt 14 bzw. 15 zugeordneten Sprühdüsen 34, 35 zugeführt werden kann. Mittels der Sprühdüsen 34 und 35 kann die Enteisungsflüssigkeit 31 auf den der Rotornabe 27 benachbart angeordneten Bereich der Rotorblätter 14 und 15 aufgesprüht werden. Der Vorratstank 20 hat vorzugsweise ein Volumen von ca. 100 Liter bis ca. 300 Liter.

Zur Förderung der Enteisungsflüssigkeit 31 vom Vorratstank 20 zu den Sprühdüsen 34 und 35 ist in die Ausgangsleitung 25 eine Förderpumpe 37 geschaltet, der eine elektrische Steuereinheit 39 zugeordnet ist, die über in der Zeichnung nicht dargestellte elektrische Verbindungsleitungen mit einer Betriebsdatenerfassungseinheit 41 sowie einer die Umgebungstemperatur der Windkraftanlage 10 sowie die Feuchtigkeit der Umgebungsluft der Windkraftanlage 10 erfassenden elektrischen Meßeinheit 43 gekoppelt ist.

Die Meßeinheit 43 stellt der Steuereinheit 39 ein der Lufttemperatur sowie der Luftfeuchtigkeit entsprechendes Meßsignal als Eingangssignal bereit, und die Steuereinheit 39 steuert in Abhängigkeit der von der Meßeinheit 43 bereitgestellten Meßdaten die Förderpumpe 37 bedarfsweise an, so daß durch Verteilung von Enteisungsflüssigkeit 31 auf den Rotorblättern 14 und 15 eine Eisbildung vermieden werden kann.

Dem Vorratstank 20 ist ein Füllstandssensor 45 zugeordnet, der ein dem Füllstand des Vorratstankes 20 entsprechendes Füllstandssignal bereitstellt. Der Füllstandssensor 45 ist ebenso wie die Steuereinheit 39 über an sich bekannte und deshalb in der Zeichnung nicht dargestellte elektrische Leitungen mit der Betreibsdatenerfassungseinheit 41 verbunden, die einen Sender umfaßt zur drahtlosen Übertragung der Betriebs- und Meßdaten der Enteisungsvorrichtung 18 an eine in der Zeichnung nicht dargestellte zentrale Überwachungseinrichtung, so daß mittels der Betriebsdatenerfassungseinheit 41 der Betriebszustand der Enteisungsvorrichtung 18 sowie die Temperatur und die Feuchtigkeit der Umgebungsluft der Windkraftanlage 10 drahtlos übertragbar und dadurch zentral erfaßbar sind.

Bei der in Figur 1 dargestellten Enteisungsvorrichtung 18 wird die Enteisungsflüssigkeit 31 im Bereich der Rotornabe 27 auf die Rotorblätter 14 und 15 aufgesprüht. Unter der Wirkung der Zentrifugalkraft verteilt sich dann die Enteisungsflüssigkeit 31 gleichmäßig über die Rotorblätter 14 und 15, so daß eine Eisbildung auf den Rotorblättern 14, 15 zuverlässig verhindert werden kann und die Rotorblätter 14, 15 gegebenenfalls auf kostengünstige Weise von Eis befreit werden können.

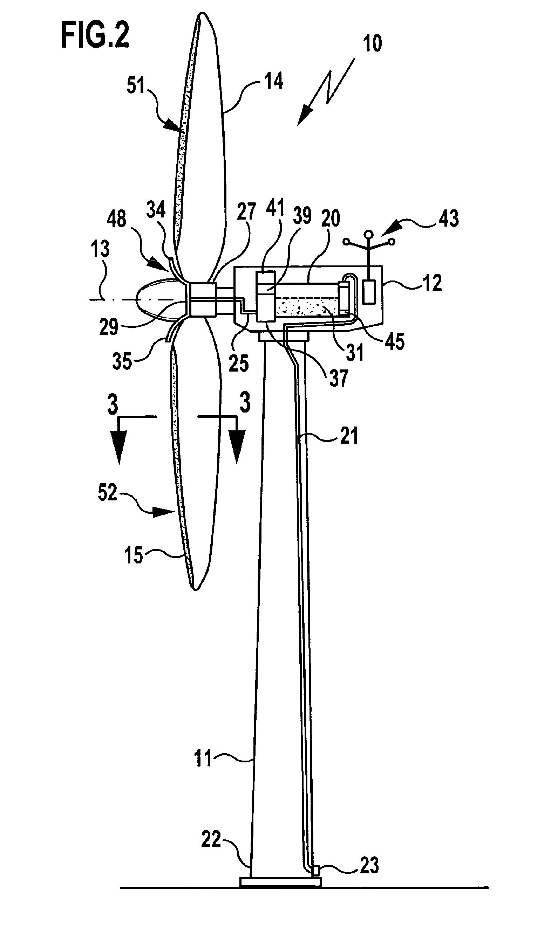

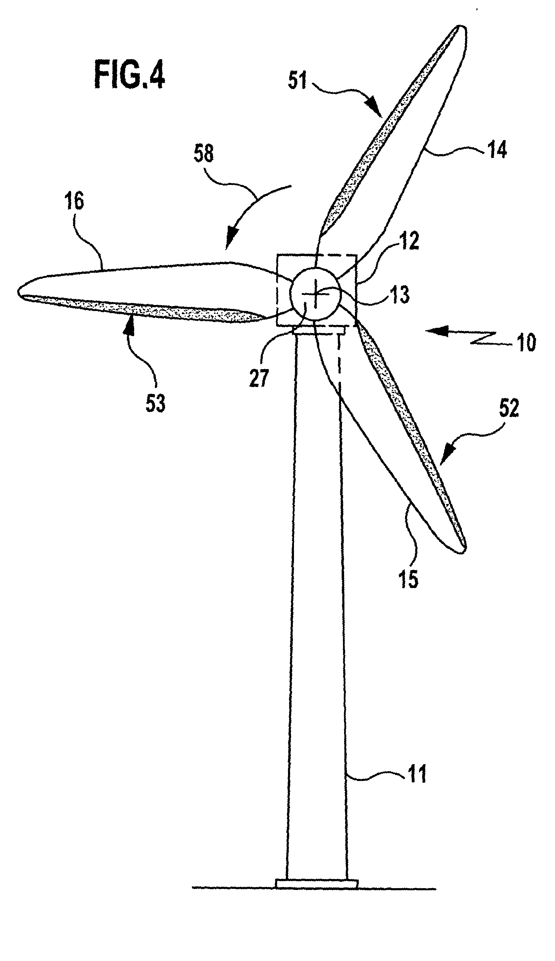

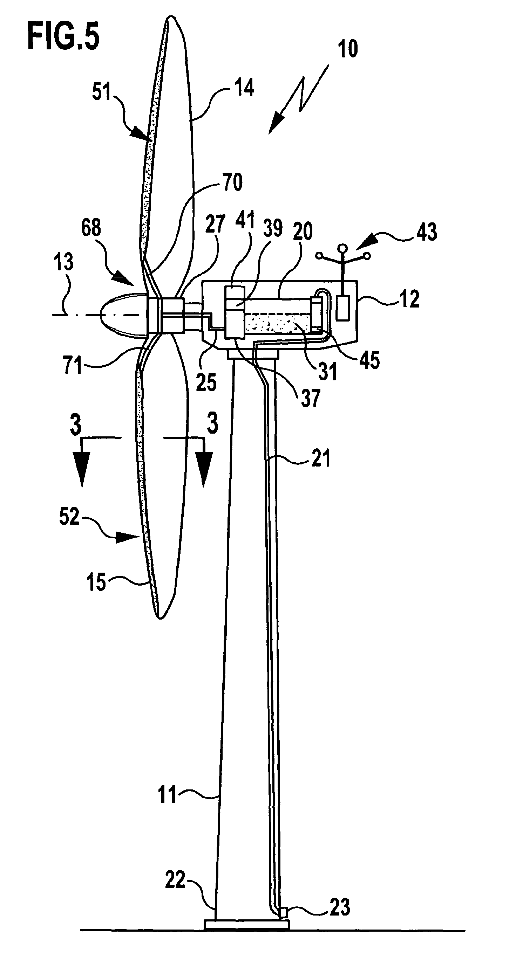

In den Figuren 2, 3 und 4 ist die bereits erläuterte Windkraftanlage 10 dargestellt, wobei zur zumindest bereichsweisen Enteisung von deren Rotorblättern 14, 15 und 16 eine Enteisungsvorrichtung 48 zum Einsatz kommt, die weitgehend identisch ausgestaltet ist wie die voranstehend unter Bezugnahme auf Figur 1 erläuterte Enteisungsvorrichtung 18. Ebenso wie in der nachstehend beschriebenen Figur 5 werden in den Figuren 2, 3 und 4 daher für identische Bauteile dieselben Bezugsweisen verwendet wie in Figur 1. Zur Vermeidung von Wiederholungen wird diesbezüglich voll inhaltlich auf die voranstehenden Erläuterungen Bezug genommen.

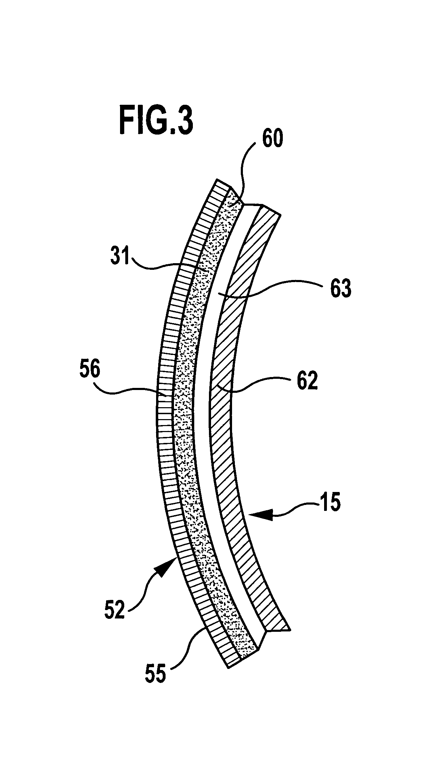

Die Enteisungsvorrichtung 48 unterscheidet sich von der Enteisungsvorrichtung 18 lediglich dadurch, daß sie zusätzlich perforierte Abdeckungen 51, 52, 53 umfaßt, die jeweils als perforiertes Stahlblech 55 ausgestaltet sind und eine Vielzahl von Durchgangsbohrungen 56 mit einem Durchmesser von maximal ca. 0,1 mm aufweisen. Vorzugsweise beträgt der Bohrungsdurchmesser etwa 80 µm. Ein Durchmesser von weniger als etwa 0,1 mm hat den Vorteil, daß unter Verwendung einer geringen Flüssigkeitsmenge eine wirkungsvolle Enteisung erzielbar ist. So kann innerhalb etwa einer Stunde etwa 1 Liter Enteisungsflüssigkeit auf die Außenseite der Abdeckungen 51, 52, 53 aufgebracht werden. Die Abdeckungen 51, 52 und 53 überdecken jeweils einen bezogen auf die Drehrichtung 58 vorderen Kantenbereich der Rotorblätter 14, 15 bzw. 16, wobei die Abdeckungen 51, 52, 53 jeweils in einem geringen Abstand zu den jeweiligen Rotorblättern 14, 15 bzw. 16 angeordnet sind, so daß zwischen den Abdeckungen 51, 52, 53 und dem jeweiligen Rotorblatt 15, bzw. 16 ein Zwischenraum 60 ausgebildet ist. Dies ist in Figur 3 dargestellt. Die Rotorblätter 14, 15, 16 sind jeweils als formstabiler Hohlkörper ausgestaltet, der aus einer glasfaserverstärkten Kunststoffwandung 62 gebildet ist, deren Aussenseite eine Beschichtung 63, beispielsweise eine Lackschicht, trägt. Unter Ausbildung des Zwischenraumes 60 sind die perforierten Abdeckungen 51, 52, 53 in einem ungefähr der Materialstärke der Abdeckungen 51, 52, 53 entsprechenden Abstand zur Beschichtung 63 an den jeweiligen Rotorblättern 14, 15 bzw. 16 gehalten.

Bei der in den Figuren 2, 3 und 4 dargestellten Enteisungsvorrichtung 48 kann die Enteisungsflüssigkeit 31 mittels der dem jeweiligen Rotorblatt 14, 15, 16 zugeordneten Sprühdüse in dem der Rotornabe 27 benachbarten Bereich in den Zwischenraum 60 eingesprüht werden. Innerhalb des Zwischenraumes 60 kann sich dann die Enteisungsflüssigkeit 31 unter Einwirkung der Zentrifugalkraft gleichmäßig verteilen, und durch die Durchgangsbohrungen 56 der perforierten Abdeckungen 51, 52, 53 hindurch kann dann die Enteisungsflüssigkeit 31 der Außenseite der Abdeckungen 51, 52, 53 zugeführt werden zur Vermeidung einer Eisbildung bzw. zur Enteisung von deren Oberfläche.

In Figur 5 ist die bereits erläuterte Windkraftanlage 10 dargestellt, wobei zur bereichsweisen Enteisung von deren Rotorblättern 14, 15 eine Enteisungsvorrichtung 68 zum Einsatz kommt. Letztere unterscheidet sich von der voranstehend unter Bezugnahme auf die Figuren 2, 3 und 4 erläuterten Enteisungsvorrichtung 48 lediglich dadurch, daß zum Einbringen der Enteisungsflüssigkeit 31 in den Zwischenraum 60 zwischen dem jeweiligen Rotorblatt 14, 15 und 16 und der zugeordneten Abdeckung 51, 52 bzw. 53 ausgehend von der Verteilereinheit 29 innerhalb des jeweiligen Rotorblattes 14, 15 jeweils eine Verteilerleitung 70, 71 verläuft, über die der Zwischenraum 60 mit der Verteilereinheit 29 in Strömungsverbindung steht. Dies hat den Vorteil, daß mittels der Förderpumpe 37 die Enteisungsflüssigkeit 31 unter Überdruck unmittelbar in den Zwischenraum 60 eingepreßt werden kann. Dadurch kann eine besonders gleichmäßige und innerhalb kurzer Zeit erfolgende Verteilung der Enteisungsflüssigkeit 30 innerhalb des Zwischenraumes 60 ausgehend von dem der Rotornabe 27 benachbart angeordneten Bereich bis zur Rotorspitze erzielt werden.

## Patentansprüche

1. Vorrichtung zum zumindest bereichsweisen Enteisen der Rotorblätter einer Windkraftanlage, **dadurch gekennzeichnet, daß** die Vorrichtung (18; 48; 68) einen Vorratstank (20) für eine Enteisungsflüssigkeit (31) umfaßt, der über eine Ausgangsleitung (25) mit einer Verteilereinheit (29) in Strömungsverbindung steht, wobei in die Ausgangsleitung (25) eine Förderpumpe (37) geschaltet ist und wobei mittels der Verteilereinheit (29) bedarfsweise von der Förderpumpe (37) geförderte Enteisungsflüssigkeit (31) auf die Rotorblätter (14, 15, 16) der Windkraftanlage (10) aufbringbar ist.

2. Vorrichtung nach Anspruch 1, **dadurch gekennzeichnet, daß** die Verteilereinheit (29) mehrere Sprühdüsen (34, 35) umfaßt, die jeweils einem Rotorblatt (14, 15) zugeordnet sind zum Aufsprühen der Enteisungsflüssigkeit (31) auf das jeweilige Rotorblatt (14, 15).

3. Vorrichtung nach Anspruch 1 oder 2, **dadurch gekennzeichnet, daß** die Förderpumpe (37) selbsttätig in Abhängigkeit von der Umgebungstemperatur und/oder der Luftfeuchtigkeit aktivierbar ist.

4. Vorrichtung nach einem der voranstehenden Ansprüche, **dadurch gekennzeichnet, daß** die Vorrichtung (18; 48; 68) eine elektrische Meßeinheit (43) umfaßt zur Bestimmung der Umgebungstemperatur und/oder der Luftfeuchtigkeit, und daß die Vorrichtung (18; 48; 68) eine mit der Meßeinheit (43) gekoppelte Steuereinheit (39) aufweist zum Steuern der Förderpumpe (37).

5. Vorrichtung nach einem der voranstehenden Ansprüche, **dadurch gekennzeichnet, daß** die Vorrichtung (48; 68) perforierte Abdeckungen (51, 52, 53) umfaßt, die zum Abdecken zumindest des bezogen auf die Drehrichtung (48) vorderen Kantenbereich eines Rotorblattes (14, 15, 16) am jeweiligen Rotorblatt (14, 15, 16) anbringbar sind unter Ausbildung eines Zwischenraumes (60) zwischen dem Rotorblatt (14, 15, 16) und der Abdeckung (51, 52, 53), wobei die Enteisungsflüssigkeit (31) von der Verteilereinheit (29) in den Zwischenraum (60) einbringbar, innerhalb des Zwischenraumes (60) über den abgedeckten Bereich des Rotorblattes (14, 15, 16) verteilbar und durch die Perforation der Abdeckung (51, 52, 53) hindurch deren Außenseite zuführbar ist.

6. Vorrichtung nach Anspruch 5, **dadurch gekennzeichnet, daß** die Enteisungsflüssigkeit (31) unter Druckbeaufschlagung in den Zwischenraum (60) einbringbar ist.

7. Vorrichtung nach Anspruch 5 oder 6, **dadurch gekennzeichnet, daß** die perforierte Abdeckung (51, 52, 53) ein perforiertes Metallblech (55) umfaßt.

8. Vorrichtung nach Anspruch 7, **dadurch gekennzeichnet, daß** die Perforation des Metallblechs (55) durch Laserbohren hergestellt ist.

9. Vorrichtung nach einem der voranstehenden Ansprüche 5 bis 8, **dadurch gekennzeichnet, daß** die perforierte Abdeckung (51, 52, 53) eine Vielzahl von Durchgangsbohrungen (56) mit einem Durchmesser von maximal ca. 0,1 mm aufweist.

10. Vorrichtung nach einem der voranstehenden Ansprüche 5 bis 9, **dadurch gekennzeichnet, daß** die Verteilereinheit (29) jeweils über zumindest abschnittsweise innerhalb der Rotorblätter (14, 15, 16) verlaufende Verteilerleitungen (70, 71) mit den Zwischenräumen (60) in Strömungsverbindung steht.

11. Vorrichtung nach einem der voranstehenden Ansprüche, **dadurch gekennzeichnet, daß** der Vorratstank (20) einen Füllstandssensor (45) aufweist, der ein dem Füllstand des Vorratstankes (20) entsprechendes Füllstandssignal bereitstellt, wobei das Füllstandssignal drahtlos übertragbar ist.

12. Vorrichtung nach einem der voranstehenden Ansprüche, **dadurch gekennzeichnet, daß** die Vorrichtung (18; 48; 68) eine Betriebsdatenerfassungseinheit (41) aufweist, die ein den Betriebs- und Meßdaten der Vorrichtung (18; 48; 68) entsprechendes Betriebsdatensignal bereitstellt, wobei das Betriebsdatensignal drahtlos übertragbar ist.

13. Windkraftanlage mit zumindest zwei Rotorblättern, die um eine gemeinsame Drehachse drehbar gehalten sind, **dadurch gekennzeichnet, daß** die Windkraftanlage (10) eine Vorrichtung (18; 48; 68) zum zumindest bereichsweisen Enteisen der Rotorblätter (14, 15, 16) nach einem der voranstehend genannten Ansprüche umfaßt.

14. Windkraftanlage nach Anspruch 13, **dadurch gekennzeichnet, daß** die Windkraftanlage (10) einen Mast (11) aufweist, der eine Maschinengondel (12) trägt, wobei der Vorratstank (20) in der Maschinengondel (12) angeordnet ist und über eine entlang des Mastes (11) verlaufende Befüllungsleitung (21) mit einem am Fuß (22) des Mastes (11) angeordneten Befüllungsanschluß (23) verbunden ist.
